# EUROPEAN PATENT SPECIFICATION

(11) **EP 1 932 720 B1**
(45) Date of publication and mention of the grant of the patent: **12.08.2009**
(21) Application number: 06126274.7
(22) Date of filing: 15.12.2006
(51) Int. Cl.: B60R 5/04, B60R 7/02

(54) **Under floor storage cover arrangement**
Abdeckungsanordnung für Unterfluraufbewahrung
Agencement de recouvrement pour stockage sous plancher

(43) Date of publication of application: 18.06.2008
(73) Proprietor: Ford Global Technologies, LLC, Dearborn, MI 48126 (US)
(72) Inventor: Göthlin, Jonas, 423 39, Torslanda (SE); Bernhardsson, Nils, 423 43, Torslanda (SE)
(74) Representative: Romare, Laila Anette

(56) References cited:
- DE-A1- 3 904 451
- DE-A1- 10 244 768
- DE-A1- 19 802 077
- FR-A- 2 886 243
- US-B1- 6 733 060
- US-B1- 6 908 269
- US-B1- 7 090 274

## Description

### TECHNICAL FIELD

The invention relates to an arrangement for an under floor storage cover, which arrangement allows the storage cover to be opened and retained in an open position.

### BACKGROUND ART

Passenger vehicles are often provided with an under floor storage structure located underneath the floor of a storage compartment. Storage structures of this type can comprise a fixed or removable storage compartment that may be used for storing a multitude of items such as a spare wheel, a toolbox, a hazard triangle or pieces of equipment or luggage that are not required to be immediately accessible. The storage compartment may also be used for storing various items out of sight.

A common problem with under floor storage covers is that they require a user to hold the cover open with one hand while accessing the contents of the storage compartment with the other. This is a particular problem if the item to be handled is heavy, bulky or if the compartment contains multiple items that can not be gripped with one hand.

US 6 752 304 shows an arrangement where storage covers can be used as dividers for an under floor storage compartment. This solution may be used for alleviating the above problem. However, the solution requires the user to open the cover fully and position it on edge in a vertical position, whereby the cover, at least partially, obstructs access to the storage compartment.

US 4 969 793 shows an arrangement where an electrically operated cover for a storage compartment can be raised as a platform in the vertical direction. Apart from the increased complexity of such an arrangement, it will add unnecessarily to the weight and production cost for the vehicle. Due to the limited lifting height, the raised cover will also prevent full access to the storage compartment from above.

DE-A-39 04 451, DE-A-198 02 077, DE-A-102 44 768 and US 7 090 274 B1 describe storage cover arrangements in vehicle floor areas and show various ways of maintaining a hinged cover in an at least partially open position.

US 6 733 060 B1 describes a storage cover arrangement in a floor area of a vehicle according to the preamble of claim 1. Furthermore, it is mentioned that the cover is maintainable in the opened vertical position to help haul and store items.

An object of this invention is to provide an improved storage cover arrangement allowing the cover to be maintained in an opened position, while eliminating the above problems.

### DISCLOSURE OF INVENTION

The object of the invention is achieved by a storage cover arrangement according to the invention, having the characteristic features defined in the appended claims.

This invention relates to a storage cover arrangement for an under floor storage compartment for vehicles, in particular passenger vehicles. The storage cover arrangement may be provided in the floor of a trunk of a sedan vehicle or in a load platform of an estate vehicle.

In the subsequent text directional terms such as "front", "rear", "right" and "left" refer to directions relative to a longitudinal axis of a vehicle, wherein the front of the vehicle is located towards the main direction of travel of the vehicle.

The storage cover arrangement comprises a cover that may be provided with a hinge arrangement at a first side edge of the cover. A recess providing a hand grip for a user may be located adjacent a second side edge of the cover, remote from the first side edge. The recess may be arranged as a part of or inside the outer periphery of the second side edge. The second side edge is preferably, but not necessarily, located substantially opposite the first side edge. For instance, the cover may be located in the load floor of an estate vehicle. If the cover is substantially rectangular, the hinge arrangement and the recess are preferably provided on opposed front and rear sides of the cover. However, the recess may also be located adjacent a rear section of a left and/or right side edge of the cover. Similarly, if the cover is substantially circular, the hinge arrangement and the recess are preferably provided on diametrically opposed front and rear sides of the cover. In order to facilitate access, the recess is preferably located in the section of the cover nearest to the user wishing to open said cover.

The recess may be provided with a detachable connector means that can be gripped by a user wishing to open the cover. When gripped by the user, the connector means can be detached from the recess and pulled in a substantially upwards direction. The connector means may be a part of the hand grip, in that it comprises a detachable section substantially integrated in the hand grip. Also the connector means can preferably, but not necessarily, be made from same material as the hand grip. The connector means and the hand grip can be made from a suitable plastic material or a combination of plastic and metal inserts or reinforcements. The connector means may be integrated in the hand grip so that it is substantially flush with an outer and/or upper surface thereof. The recess and the combined hand grip and connector means may in turn be sunk into the cover so that they are substantially flush with the upper surface of the cover and the surrounding load floor area. The recess and its hand grip may be shaped to provide an ergonomic hand grip for a user wishing to open the cover without retaining it in the open position using the connector means. A user placing the fingers of one hand in the recess may take hold of the entire hand grip, to lift and support the cover manually. Alternatively, the user may grip the detachable connector means with at least two fingers to lift the cover and support it using the connector. In the latter case, the connector means may be attached to the cover by an extendible means allowing the connector means to be withdrawn a predetermined, maximum distance from the recess. When the connector means has been withdrawn to this predetermined distance, further upwards movement of the connector means will cause the cover to open. The user may then continue to lift the connector means upwards until the cover is fully open. When the cover is in the fully, or nearly fully, open position, the connector means may be located adjacent an attachment means to which it can be attached. In its fully open position, the centre of gravity of the cover may preferably be close to but not at or past a vertical plane through the axis of the hinge arrangement. The cover will then be retained in its open position, and the extendible means is maintained fully withdrawn by the weight of the cover. In this way the cover will close under its own weight when the connector means is released. However, it may still be possible to move the cover so that its centre of gravity is located past the said vertical plane through the hinge arrangement.

The connector means may be substantially hook shaped, for instance J- or U-shaped, and may be arranged to be attached to a fixed portion of the vehicle body. The connector means may have a shape arranged to cooperate with the attachment means. Suitable attachment means can be an upper section of a sill surrounding the opening behind a rear door or hatch or similar opening of an estate vehicle. A suitable sill comprises a substantially U-shaped channel surrounding at least the upper and side edges of the opening in order to prevent water from leaking into the vehicle. At least parts of the sill may be provided with an elastic seal member, in order to provide additional protection against water leakage between the edge of the opening and the hatch or door. The connector means may be shaped to allow it to be hooked over an upper edge provided with such a seal member. Similarly, the upper sill for a trunk lid of a sedan vehicle may be used. A part of a hinge means for the rear door or the trunk lid may also be used for this purpose.

Alternatively, the connector means may be a clip-on device arranged to be attached to an attachment means or a suitable portion of the vehicle itself. A suitable attachment means such as a shackle or a bar shaped to cooperate with the connector means may be provided adjacent the sill, in the rear door or at a similar suitable location in the luggage compartment.

The connector means may also be a snap-on device arranged to be attached to a cooperating locking device fixed to the vehicle body or a part thereof. For instance, the connector means may comprise a tongue arranged to cooperate with a resilient locking device, wherein the tongue is snapped into place in the locking device. The resilient locking device may be released by applying a predetermined force to the connector means. Alternatively the tongue may cooperate with a locking device of the buckle type, wherein the tongue is released by pressing an actuator on the buckle. In the above examples, a similar locking device may be provided in the recess to locate and retain the connector means when not in use.

As stated above, the extendable means is arranged for connecting the connector means and the cover. The extendable means may be connected to the cover below an upper, visible surface of the cover. In addition, the extendable means may be arranged to extend through an opening in the recess. This allows the extendable means to be stored and protected from damage and unnecessary wear when not in use.

When the connector means is detached and withdrawn from the recess, the extendable means is arranged to provide a resisting force for the connector means. In this way, the extendable means may be arranged to retract the connector means into the recess when the connector is released by the user or from the attachment means. The resilient element is preferably arranged to maintain the connector element is position in the recess.

The resisting force may be achieved by any suitable means, for example by providing an extendable means in the form of an elongated resilient element. Such a resilient element may comprise a resilient band or strap attached to the cover and the connector means at its respective ends. The element may be resilient along its entire length or in a predetermined part thereof. As stated above, the resilient element allows the connector means to be withdrawn a predetermined distance, wherein further upwards movement of the connector means will cause the cover to open. Consequently, when the connector means is withdrawn the resilient element will extend a predetermined maximum distance. Alternatively, the said predetermined distance is equal to the extension of a resilient element made from a suitable material, having a predetermined stiffness, under the weight of the cover. Suitable materials may be bands or straps of rubber or elastomeric materials, or elastic straps comprising textile or plastic materials in combination with elastomeric materials in varying amounts.

The extendable means may also comprise a belt and a belt retractor. In this case, the belt may comprise a woven fabric made from suitable textile or plastic materials. The belt retractor may be arranged to apply a retracting force to the belt at all times, or to allow the belt to be withdrawn against a retracting force and releasably locked in a desired position.

### BRIEF DESCRIPTION OF DRAWINGS

In the following text, the invention will be described in detail with reference to the attached drawings. These schematic drawings are used for illustration only and do not in any way limit the scope of the invention. In the drawings:
- Figure 1: shows a perspective view of an estate vehicle having a luggage compartment provided with a storage cover arrangement according to the invention;
- Figure 2: shows a plan view of the cover of Figure 1; and
- Figure 3: shows a cross-section through the cover in the longitudinal direction of the vehicle.

### EMBODIMENTS OF THE INVENTION

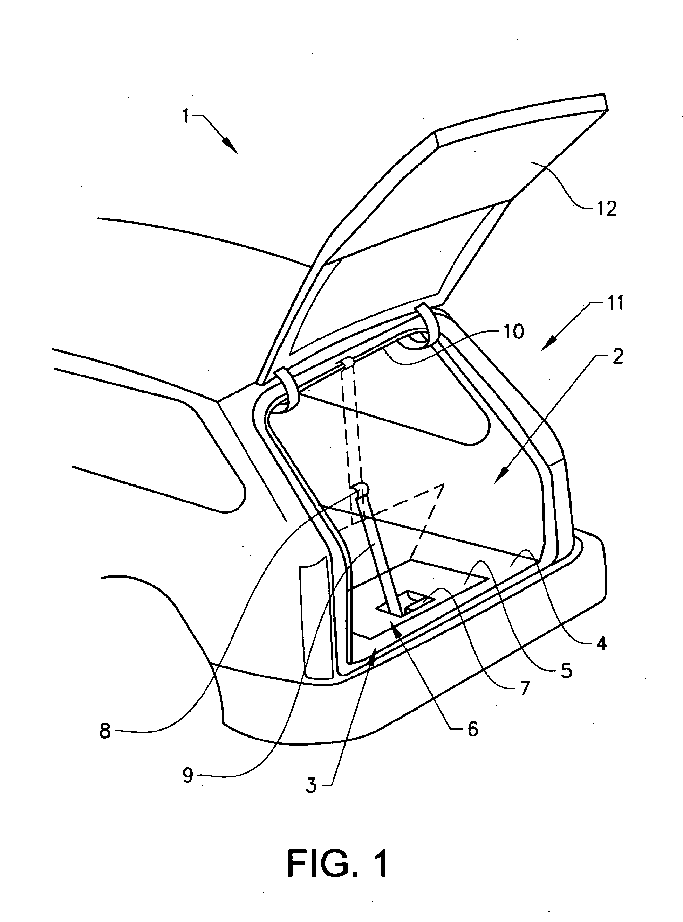

Figure 1 shows a perspective view of an estate vehicle 1 having a luggage compartment 2 provided with a storage cover arrangement 3 according to the invention. The storage cover arrangement 3 is provided for an under floor storage compartment (not shown) in the vehicle 1. The storage cover arrangement 3 is provided in the upper surface of a load platform 4 of the vehicle. The storage cover arrangement 3 comprises a cover 5 that is provided with a recess 6 with a hand grip 7 for opening the cover 5. The hand grip 6 is provided with a detachable hook 8 that can be withdrawn from the hand grip 6 by a user. According to this example, the hook 8 is connected to the underside of the cover 5 by a resilient strap 9 that is withdrawn through an opening (not shown) in the recess 6. The strap 9 can be extended to the position shown in Figure 1 by a user wishing to open the cover 5. When the strap 9 is fully extended as shown, the cover 5 will still be in its closed position. The user can then exert a lifting force on the hook 8 to open the cover 5 into its open position, as shown in dash-dotted lines. To retain the cover 5 in the open position, the user can attach the hook 8 around the upper edge of a sill 10 surrounding the opening 11 of the luggage compartment behind a rear door 12.

The example in Figure 1 shows a connector means in the form of a J-shaped hook 8, which is attached onto the edge of a sill surrounding the opening behind a rear door or hatch or similar opening of an estate vehicle. Alternatively the hook can be attached to the upper sill for a trunk lid of a sedan vehicle or to a part of a hinge means for the rear door or the trunk lid. According to a further example the connector means may be a clip-on device arranged to be attached to a U-shaped bar, or similar, provided adjacent the sill or the opening for the luggage compartment. The connector means can also be a snap-on device arranged to be attached to a cooperating locking device fixed to the vehicle adjacent the said opening. An example of a snap-on device is a tongue and buckle arrangement.

The strap shown in Figure 1 is an elastic strap comprising textile or plastic materials in combination with elastomeric materials in varying amounts. However, the strap can also comprise a band or strap of rubber or a suitable elastomeric material. Instead of a resilient strap it is also possible to use a belt and a belt retractor. The belt can comprise a woven fabric made from suitable textile or plastic materials.

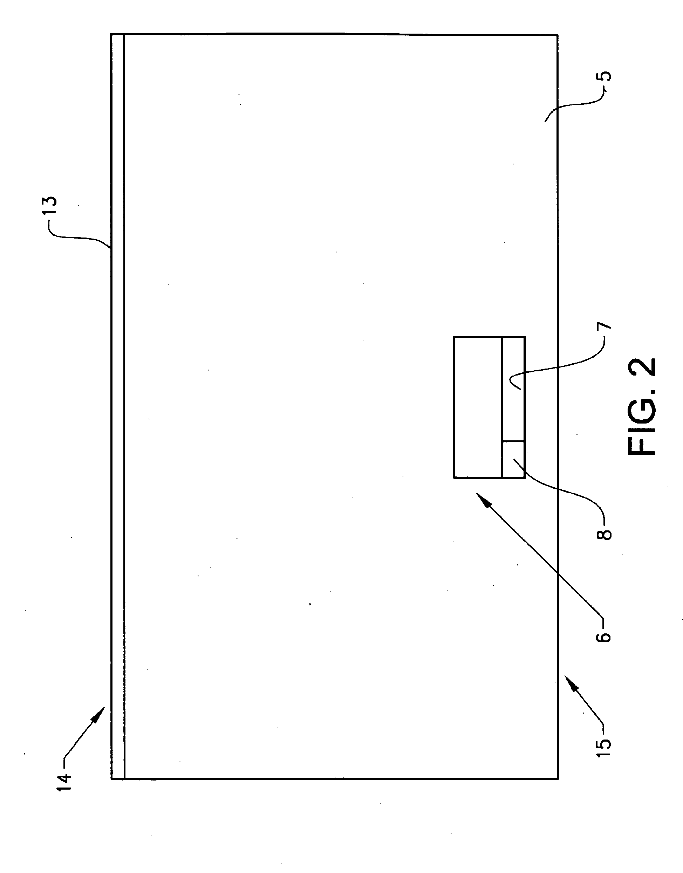

Figure 2 shows a plan view of the cover 5 of Figure 1. The cover 5 is provided with a hinge 13 at a first side edge 14 of said cover 5. The hinge 13 comprises a plastic component attaching the first side edge 14 to a corresponding edge (not shown) in the load platform. The recess 6 provides a hand grip 7 for a user, which hand grip 7 is located adjacent a second side edge 15 of the cover 5, opposite the first side edge 14. The hook 8 is integrated in the hand grip 7 so that it is substantially flush with the upper surface thereof. In Figure 2 the hook 8 is located in a position to one side of the hand grip 7. The hook 8 may in fact be located at any position between the ends of the hand grip 7. The combined hand grip 7 and hook 8 is sunk into the cover 5 so that they are substantially flush with the upper surface of the cover 5. The recess 6 and its hand grip 7 are shaped to provide an ergonomic hand grip for a user wishing to open the cover without retaining it in the open position using the connector means. A user placing the fingers of one hand in the recess 6 may take hold of the entire hand grip 7 with three or four fingers, to lift and support the cover 5 manually. Alternatively, the user may grip the detachable hook 8 with two fingers to lift the cover 5 and retain it in an open position using the hook 8. In the latter case, the hook 8 is used to withdraw the strap 9 a predetermined, maximum distance from the recess 6, as shown in Figure 1, lifting the cover 5 and attaching the hook 8 to the sill of the luggage compartment opening. The movement of the cover 5 and the recess 6 about the axis of the hinge 13 allows the hook 8 to be displaced upwards, past an upper edge of the sill 10, so that the hook can be attached to the sill 10.

In the example shown in Figure 1, the centre of gravity of the cover 5 is not moved past a vertical plane through the axis of the hinge 13. The cover 5 will then be retained in its open position by the hook 8 and the strap 9, and the strap 9 is maintained fully withdrawn by the weight of the cover 5. In order to close the cover 5 the hook 8 is released from the sill 10, whereby the cover 5 may begin to close under its own weight. Once the cover 5 has been lowered to its closed position, the hook 8 can be released in order to allow the resilient strap 9 to retract the hook 8 into its stored position in the recess 6.

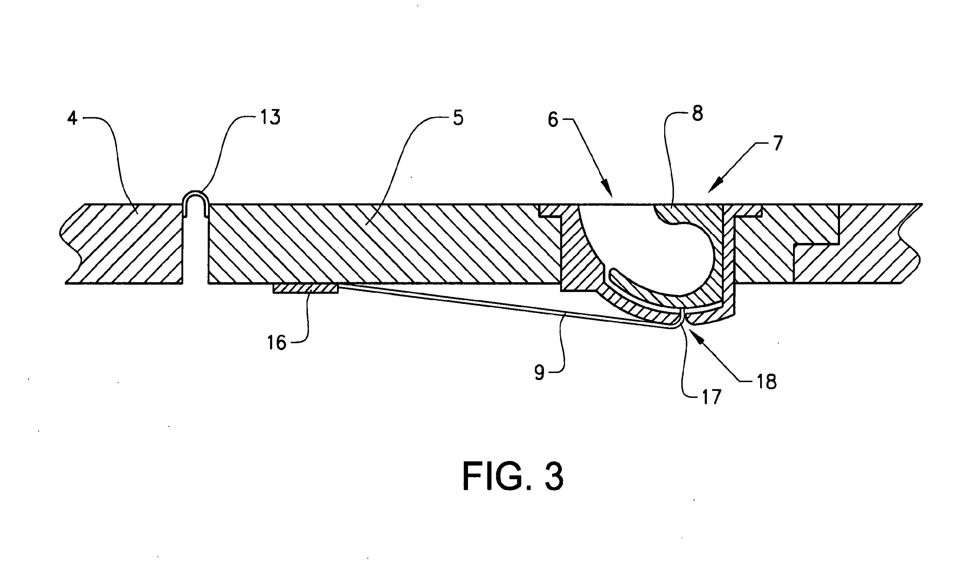

Figure 3 shows a vertical cross-section through the load platform 4 and the cover 5 in the longitudinal direction of the vehicle. Note that the figure is not drawn to scale for the purpose of clarity. The cross-section is taken through the hook 8 in the recess 6. The recess 6 and the combined hand grip 7 and hook 8 are sunk into the cover 5 so that they are substantially flush with the upper surface of the cover 5 and the surrounding load platform 4. The strap 9 is attached to the underside of the cover 5 at its front end 16 and to the underside of the hook 8 at its rear end 17. The recess 6 is provided with an opening 18 below the hook 8, so that the strap 9 may extend through the said opening 18. The attachment point for the rear end 17 of the strap 9 and the location of the opening 18 coincides to allow the hook 8 to be retracted from a detached position into the position shown in Figure 3 when released by a user. The edges of the opening 18 are rounded to allow the strap 9 to be withdrawn and retracted without catching or wedging.

The invention is not limited to the above embodiments, but may be varied freely within the scope of the appended claims.

For instance, the above embodiments merely provides a non-limiting list of examples of extendable means, types of cooperating connector and attachment means, and examples of suitable materials for making these means and their components.

## Claims

1. Storage cover arrangement in a floor area of a vehicle, said storage cover arrangement comprising a cover having a hinge arrangement at a first side edge and a recess forming a hand grip at a side edge remote from the first side edge, **characterized in that** the recess comprises a connector means, that is detachable from the recess, and an extendable means connecting the connector means and the cover, wherein the connection means is arranged to be connected to an attachment means for retaining the cover in an at least partially open position.

2. Storage cover arrangement according to claim 1, **characterized in that** the connector means is a part of the hand grip.

3. Storage cover arrangement according to claim 1, **characterized in that** the connector means is hook shaped and is arranged to be attached to a fixed portion of the vehicle body.

4. Storage cover arrangement according to claim 3, **characterized in that** the attachment means is a sill surrounding a hatch, a door or a similar opening in the vehicle body.

5. Storage cover arrangement according to claim 1, **characterized in that** the connector means is a clip-on device arranged to be attached to a portion of the vehicle.

6. Storage cover arrangement according to claim 5, **characterized in that** the attachment means is a hinge for a hatch, a door or a similar opening in the vehicle body.

7. Storage cover arrangement according to claim 1, **characterized in that** the connector means is a snap-on device arranged to be attached to a cooperating locking device fixed to the vehicle body.

8. Storage cover arrangement according to claim 1, **characterized in that** the extendable means is connected to the cover below an upper, visible surface of the cover.

9. Storage cover arrangement according to claim 8, **characterized in that** the extendable means is arranged to extend through an opening in the recess.

10. Storage cover arrangement according to claim 1, **characterized in that** the extendable means is arranged to provide a resisting force for the connector means when the connector is detached from the recess.

11. Storage cover arrangement according to claim 1, **characterized in that** the extendable means is arranged to retract the connector means into the recess when the connector is released from the attachment means.

12. Storage cover arrangement according to claim 11, **characterized in that** the extendable means is an elongated resilient element.

13. Storage cover arrangement according to claim 11, **characterized in that** the extendable means comprises a belt and a belt retractor.

## Patentansprüche

1. Aufbewahrungsabdeckungsanordnung für einen Bodenbereich eines Fahrzeuges, wobei die Aufbewahrungsabdeckungsanordnung eine Abdeckung mit einer Scharnieranordnung an einem ersten Seitenrand und eine Ausnehmung, die einen Handgriff an einem Seitenrand der von dem ersten Seitenrand entfernt ist aufweist,
**dadurch gekennzeichnet, dass**
die Ausnehmung ein Verbindungselement aufweist, das von der Ausnehmung entfernbar ist und ein verlängerbares Element, das das Verbindungselement und die Abdeckung verbindet, wobei das Verbindungselement angeordnet ist, um mit einem Befestigungselement verbunden zu werden, um die Abdeckung in einer zumindest teilweise geöffneten Position zu halten.

2. Aufbewahrungsabdeckungsanordnung nach Anspruch 1, **dadurch gekennzeichnet, dass** das Verbindungselement ein Teil des Handgriffs ist.

3. Aufbewahrungsabdeckungsanordnung nach Anspruch 1, **dadurch gekennzeichnet, dass** das Verbindungselement hakenförmig ist und angeordnet ist, um an einer festgelegten Position des Fahrzeugkörpers angebracht zu werden.

4. Aufbewahrungsabdeckungsanordnung nach Anspruch 3, **dadurch gekennzeichnet, dass** das Befestigungselement eine Schwelle ist die eine Klappe, eine Tür oder eine ähnliche Öffnung des Fahrzeugkörpers umgibt.

5. Aufbewahrungsabdeckungsanordnung nach Anspruch 1, **dadurch gekennzeichnet, dass** das Verbindungselement eine anklemmbare Vorrichtung ist, die angeordnet ist um an einem Teil des Fahrzeuges befestigt zu werden.

6. Aufbewahrungsabdeckungsanordnung nach Anspruch 5, **dadurch gekennzeichnet, dass** das Befestigungselement ein Scharnier für eine Klappe, eine Tür oder eine ähnliche Öffnung des Fahrzeugkörpers ist.

7. Aufbewahrungsabdeckungsanordnung nach Anspruch 1, **dadurch gekennzeichnet, dass** das Verbindungselement eine anklemmbare Vorrichtung ist, die angeordnet ist, um an einer zusammenwirkenden Verriegelungsvorrichtung, die an dem Fahrzeugkörper befestigt ist, befestigt zu werden.

8. Aufbewahrungsabdeckungsanordnung nach Anspruch 1, **dadurch gekennzeichnet, dass** das verlängerbare Element mit der Abdeckung unterhalb einer oberen, sichtbaren Oberfläche der Abdeckung verbunden ist.

9. Aufbewahrungsabdeckungsanordnung nach Anspruch 8, **dadurch gekennzeichnet, dass** das verlängerbare Element angeordnet ist, um sich durch eine Öffnung in der Ausnehmung zu erstrecken.

10. Aufbewahrungsabdeckungsanordnung nach Anspruch 1, **dadurch gekennzeichnet, dass** das verlängerbare Element angeordnet ist, um das Verbindungselement mit einer Widerstandskraft zu versehen, wenn der Verbinder von dem Vorsprung gelöst wird.

11. Aufbewahrungsabdeckungsanordnung nach Anspruch 1, **dadurch gekennzeichnet, dass** das verlängerbare Element angeordnet ist, um das Verbindungselement in die Ausnehmung zurückzuziehen, wenn der Verbinder von dem Befestigungselement gelöst wird.

12. Aufbewahrungsabdeckungsanordnung nach Anspruch 11, **dadurch gekennzeichnet, dass** das verlängerbare Element ein verlängertes elastisches Element ist.

13. Aufbewahrungsabdeckungsanordnung nach Anspruch 11, **dadurch gekennzeichnet, dass** das verlängerbare Element einen Gurt und einen Gurtaufroller umfasst.

## Revendications

1. Agencement de couvercle pour stockage dans une zone de plancher d'un véhicule, ledit agencement de couvercle pour stockage comprenant un couvercle présentant un agencement de charnière sur un premier bord latéral ainsi qu'un évidement formant une poignée sur un bord latéral situé à distance du premier bord latéral, **caractérisé en ce que** l'évidement comprend un moyen de liaison détachable de l'évidement et un moyen extensible reliant le moyen de liaison et le couvercle, le moyen de liaison étant agencé de façon à être relié à un moyen de fixation destiné à retenir le couvercle en position au moins partiellement ouverte.

2. Agencement de couvercle pour stockage selon la revendication 1, **caractérisé en ce que** le moyen de liaison est une partie de la poignée.

3. Agencement de couvercle pour stockage selon la revendication 1, **caractérisé en ce que** le moyen de liaison est de la forme d'un crochet et est agencé de façon à être fixé à une partie fixe du corps de véhicule.

4. Agencement de couvercle pour stockage selon la revendication 3, **caractérisé en ce que** le moyen de fixation est une semelle entourant un hayon, une porte ou une ouverture similaire dans le corps de véhicule.

5. Agencement de couvercle pour stockage selon la revendication 1, **caractérisé en ce que** le moyen de liaison est un dispositif clipsable prévu pour être fixé sur une partie d'un véhicule.

6. Agencement de couvercle pour stockage selon la revendication 5, **caractérisé en ce que** le moyen de fixation est une charnière destiné à un hayon, une porte ou une ouverture similaire d'un corps de véhicule.

7. Agencement de couvercle pour stockage selon la revendication 1, **caractérisé en ce que** le moyen de liaison est un dispositif encliquetable prévu pour être fixé à un dispositif de verrouillage coopérant fixé au corps de véhicule.

8. Agencement de couvercle pour stockage selon la revendication 1, **caractérisé en ce que** le moyen extensible est relié au couvercle sous une face supérieure visible du couvercle.

9. Agencement de couvercle pour stockage selon la revendication 8, **caractérisé en ce que** le moyen extensible est agencé de façon à s'étendre à travers une ouverture prévue dans l' évidement.

10. Agencement de couvercle pour stockage selon la revendication 1, **caractérisé en ce que** le moyen extensible est agencé de façon à fournir une force de résistance pour le moyen de liaison lorsque le dispositif de liaison est détaché de l'évidement.

11. Agencement de couvercle pour stockage selon la revendication 1, **caractérisé en ce que** le moyen extensible est agencé de façon à rétracter le moyen de liaison dans l'évidement lorsque le dispositif de liaison est libéré du moyen de fixation.

12. Agencement de couvercle pour stockage selon la revendication 11, **caractérisé en ce que** le moyen extensible est un élément élastique allongé.

13. Agencement de couvercle pour stockage selon la revendication 11, **caractérisé en ce que** le moyen extensible comprend une ceinture et un rétracteur de ceinture.
